# EUROPÄISCHE PATENTANMELDUNG

(11) **EP 2 444 242 A1**
(43) Veröffentlichungstag der Anmeldung: **25.04.2012**
(21) Anmeldenummer: 10015685.0
(22) Anmeldetag: 15.12.2010
(51) Int. Cl.: B29D 30/06, B29C 35/04

(54) **Verfahren und Vorrichtung zum Vulkanisieren von Reifen**

(30) Priorität: 22.10.2010 DE 102010049308
(71) Anmelder: Linde AG, 80331 München (DE)
(72) Erfinder: Blanke, Martin, 85521 Riemerling (DE)

(57) **Zusammenfassung**

Die Gemäß dem erfindungsgemäßen Verfahren zum Vulkanisieren von Reifen wird ein Vulkanisationsbalg (2) mit einem Druckgas beaufschlagt, um einen vorbestimmten Druck auf den zu vulkanisierenden Reifen (4) auszuüben. Zusätzlich zum Druckgas wird dem Vulkanisationsbalg (2) ein reduzierendes Gas zugeführt, wobei das Gemisch aus Druckgas und reduzierendem Gas ein Formiergas ist.

## Beschreibung

Die vorliegende Erfindung betrifft ein Verfahren und eine Vorrichtung zum Vulkanisieren von Reifen.

Die Reifenvulkanisation erfolgt in Heizpressen, wobei ein Reifenrohling in geeignete Formsegmente eingesetzt und über einen Vulkanisationsbalg aufgeheizt und mit Druck beaufschlagt wird.

Das Aufheizen erfolgt bei der Reifenvulkanisation meist durch Wasserdampf oder Heißwasser. Diese Heizmedien werden unter einem hohen Druck in den Vulkanisationsbalg eingebracht. Zum Aufheizen der Heizmedien und um die Temperatur im Vulkanisationsbalg aufrechtzuerhalten ist aufgrund des hohen Wärmeübergangs des Heizmediums viel Energie erforderlich.

Nach der Heizphase wird das Heizmedium im Vulkanisationsbalg in einer Haltephase durch Stickstoff ersetzt und der Reifenrohling erhält seine endgültige Form. Dem gasförmigen Stickstoff muss aufgrund seiner geringen Wärmekapazität nur wenig Energie zugeführt werden, um den Reifenrohling bzw. den Vulkanisationsbalg auf Temperatur zu halten.

Der Vulkanisationsbalg drückt den Reifenrohling bspw. mit etwa 12 bar gegen eine Reifenform. Der Vorgang dauert je nach Reifenkategorie, bei einer Temperatur von 165 °C bis 200°C, zwischen 9 und 17 Minuten. Die Vulkanisation löst eine chemische Reaktion aus, wobei Kautschuk und Chemikalien durch Schwefel verbunden werden. Es bilden sich vernetzte Molekülketten aus, wodurch elastischer Gummi entsteht. In einem abschließenden Fertigungsverfahren werden überstehende Gummiteile entfernt.

Die Lebensdauer eines Vulkanisationsbalges ist ein kritischer Faktor in der Reifenherstellung. Der Vulkanisationsbalg degradiert über seine Lebensdauer. Diese Degradation ist insbesondere auf Sauerstoff, der während des Aufheizens über das Heizmedium in den Vulkanisationsbalg eingebracht wird, zurückzuführen. Der Sauerstoff kann im Heizdampf oder im Heißwasser in gelöster Form vorliegen und während der Heizphase entweichen. Der Sauerstoff kann auch auf Grund von Undichtigkeiten bei der Stickstoffzuführung während der Haltephase in den Vulkanisationsbalg gelangen. Durch den molekularen Sauerstoff werden die vernetzten Molekülketten im Gummi des Vulkanisationsbalgs aufgebrochen, wodurch der Gummi altert und schließlich reißt. Dies wird als oxygen reversion bezeichnet.

Durch Einbringen von chemischen Antioxidantien in das Material des Vulkanisationsbalges bei der Herstellung, bspw. durch fluorisieren, wird versucht diesen Prozess zu verlangsamen. Allerdings werden diese Antioxidantien durch Wasserstoff in den Heiz- und Druckmedien aus dem Vulkanisationsbalg gelöst. Sobald die Antioxidantien entfernt sind, greift der molekulare Sauerstoff den Gummi des Vulkanisationsbalges an.

Da die Produktionskosten bei der Reifenherstellung einen wesentlichen Faktor darstellen und Vulkanisationsbälge relativ teuer sind, wird versucht die Lebensdauer der Vulkanisationsbälge zu erhöhen.

Aufgabe der vorliegenden Erfindung ist es daher, ein Verfahren bereitzustellen, bei dem die Lebensdauer eines Vulkanisationsbalges verlängert wird und somit die Produktionskosten bei der Reifenherstellung gesenkt werden können.

Die Erfindung weist zur Lösung dieser Aufgabe die im Patentanspruch 1 angegebenen Merkmale auf. Vorteilhafte Ausgestaltungen hiervon sind in den weiteren Ansprüchen angegeben.

Gemäß dem erfindungsgemäßen Verfahren zum Vulkanisieren von Reifen wird ein Vulkanisationsbalg mit einem Druckgas beaufschlagt, um einen vorbestimmten Druck auf den zu vulkanisierenden Reifen auszuüben. Zusätzlich zum Druckgas wird dem Vulkanisationsbalg ein reduzierendes Gas zugeführt, wobei das Gemisch aus Druckgas und reduzierendem Gas ein Formiergasgemisch ist.

Unter Formiergasgemisch wir im Rahmen der vorliegenden Erfindung ein Gemisch verstanden das Stickstoff und Wasserstoff enthält.

Im Vulkanisationsbalg kann durch ein Heizmedium, durch Verunreinigungen im Druckgas und/oder durch Undichtigkeiten im System ein Oxidans vorhanden sein. Dieses Oxidans ist in der Regel molekularer Sauerstoff. Das reduzierende Gas, insbesondere Wasserstoff, reagiert mit dem im Vulkanisationsbalg vorhandenen molekularen Sauerstoff zu Wasser. Dies verhindert, dass die vernetzten Molekülketten im Gummi des Vulkanisationsbalges durch den molekularen Sauerstoff aufgebrochen werden, wodurch der Gummi altert und/oder spröde wird und schließlich reißt. Somit bleibt der Gummi durch Einbringen eines reduzierenden Gases länger elastisch wodurch sich die Lebensdauer eines Vulkanisationsbalges erheblich verlängert.

Das reduzierende Gas kann unter Zuhilfenahme eines Katalysators mit dem im Vulkanisationsbalg enthaltenen Oxidans reagieren. Durch die Verwendung eines Katalysators kann das reduzierende Gas effizient Oxidans binden und dadurch den Vulkanisationsbalg besser vor dem schädlichen Einfluss von Sauerstoff schützen

Im Vulkanisationsbalg kann eine Konzentration des Oxidans detektiert werden. Nach Maßgabe der detektierten Konzentration des Oxidans ist vorgesehen reduzierendes Gas dem Druckgas zuzuführen. Hierdurch wird sichergestellt, dass eine kritische Konzentration des Oxidans im Vulkanisationsbalg nicht überschritten wird. Zudem wird nur so viel reduzierendes Gas wie nötig ist, um das Oxidans zu binden zugeführt. Dies spart Kosten, da das reduzierende Gas, vorzugsweise Formiergas oder auch Wasserstoff, teuer ist.

Ab einem Grenzwert der Konzentration des Oxidans im Vulkanisationsbalg von 0 ppm bzw. 1 ppm bzw. 2,5 ppm bzw. 5 bzw. 10 ppm bzw. 50 ppm bzw. 100 ppm bzw. 250 ppm bzw. 500 ppm bzw. 1000 ppm wird reduzierendes Gas zugeführt.

Versuche haben gezeigt, dass eine Konzentration von 1 % bzw. 10000 ppm Sauerstoff im Vulkanisationsbalg dessen Lebensdauer auf 20% bis 50 % gegenüber einem Betrieb mit Heißwasser reduziert. Eine Konzentration von 0,1% bzw. 1000 ppm Sauerstoff im Vulkanisationsbalg reduziert dessen Lebensdauer um 10% bis 20 %. Bereits bei einer Konzentration von 50 ppm Sauerstoff im Vulkanisationsbalg erhöht sich die Lebensdauer des Vulkanisationsbalgs um 10% bis 20 %. Bei einer Konzentration von 5 ppm Sauerstoff im Vulkanisationsbalg erhöht sich die Lebensdauer des Vulkanisationsbalgs um 20% bis 50 % gegenüber einem Betrieb mit Heißwasser. Daher ist erfindungsgemäß vorgesehen, dass immer so viel reduzierendes Gas zugeführt wird, dass die Konzentration an Oxidans bzw. Sauerstoff im Vulkanisationsbalg von 50 ppm bis 25 ppm, bzw. von 15 ppm bis 5 ppm, bzw. von 8 ppm bis 5 ppm und vorzugsweise von 0 ppm bis 1 ppm beträgt. Durch derart niedrige Sauerstoffkonzentrationen im Vulkanisationsbalg wird dessen Lebensdauer erhöht.

Das im Vulkanisationsbalg befindliche Formiergasgemisch kann über eine mit dem Vulkanisationsbalg verbundene Bypassleitung, in der der Katalysator angeordnet ist, zirkuliert werden. Hieraus ergibt sich der Vorteil, dass der Katalysator nicht im Vulkanisationsbalg angeordnet werden muss, um das Oxidans und das reduzierende Gas zu kontaktieren. Da Katalysatoren empfindlich im Hinblick auf Feuchtigkeit sein können, kann der Katalysator durch das Heizmedium beschädigt werden, würde man ihn im Vulkanisationsbalg anordnen.

Sollte der Katalysator nicht empfindlich auf Feuchtigkeit sein ist es auch möglich diesen im Vulkanisationsbalg anzuordnen.

Die Konzentration des Oxidans kann im Vulkanisationsbalg detektiert werden. Dass die Konzentration im Vulkanisationsbalg detektiert wird, bedeutet im Rahmen der vorliegenden Erfindung nicht, dass die Konzentration direkt im Vulkanisationsbalg detektiert werden muss. Sie kann bspw. auch in der Bypassleitung detektiert werden. Es kann aber auch ein Sensor im Vulkanisationsbalg angeordnet sein, um die Konzentration direkt dort zu messen. Nach Maßgabe der detektierten Konzentration des Oxidans kann Formiergas bzw. Formiergasgemisch über die Bypassleitung, in der der Katalysator angeordnet ist, zirkuliert werden, um das Oxidans mit reduzierendem Gas zu binden.

Es ist zudem eine Vorrichtung zum Vulkanisieren von Reifen vorgesehen. Diese umfasst einen Vulkanisationsbalg, wobei der Vulkanisationsbalg mit einer Druckgasquelle zum Beaufschlagen des Vulkanisationsbalges mit einem Druckgas ausgebildet ist, um einen vorbestimmten Druck auf den zu vulkanisierenden Reifen auszuüben. Die Vorrichtung weist eine Reduktionsgasquelle auf, um dem Vulkanisationsbalg ein reduzierendes Gases zuzuführen, wobei das Gemisch aus Druckgas und reduzierendem Gas ein Formiergasgemisch ist.

Die Erfindung wird im folgenden anhand der Zeichnungen näher erläutert. Diese zeigen in:
- Fig. 1: eine erfindungsgemäße Vorrichtung zum Vulkanisieren von Reifen gemäß einem ersten Ausführungsbeispiel schematisch in einer seitlich geschnittenen Ansicht,
- Fig. 2: eine erfindungsgemäße Vorrichtung zum Vulkanisieren von Reifen gemäß einem zweiten Ausführungsbeispiel schematisch in einer seitlich geschnittenen Ansicht, und
- Fig. 3: eine erfindungsgemäße Vorrichtung zum Vulkanisieren von Reifen gemäß einem dritten Ausführungsbeispiel schematisch in einer seitlich geschnittenen Ansicht.

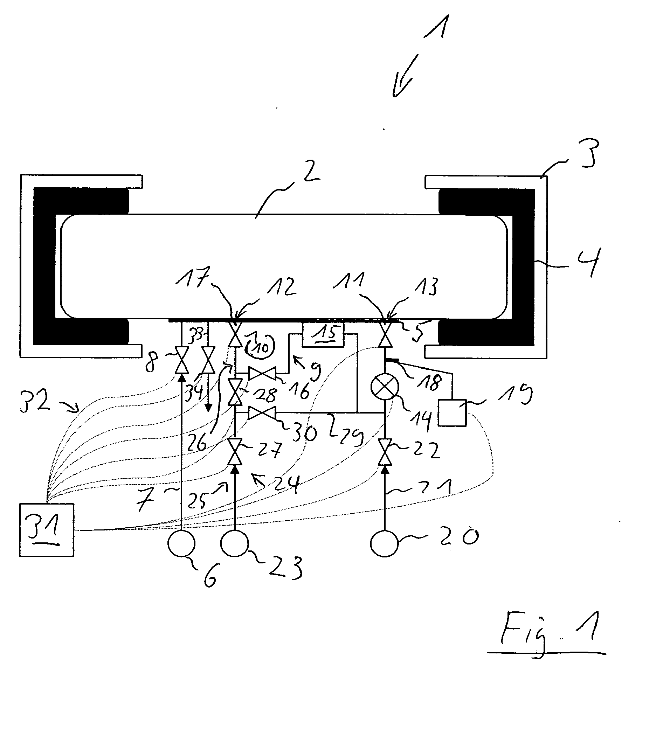

Eine erfindungsgemäße Vorrichtung 1 zum Vulkanisieren von Reifen umfasst einen Vulkanisationsbalg 2 und eine Reifenform 3 (Fig. 1). Der Vulkanisationsbalg 2 ist zum Erwärmen und zum Ausformen eines Reifenrohlings bzw. eines unvulkanisierten Reifens 4 ausgebildet. Beim Vulkanisieren wird der Reifenrohling 4 über den Vulkanisationsbalg an die Reifenform 3 angepresst und aufgeheizt, wodurch er seine endgültige Form erhält.

Der Vulkanisationsbalg 2 ist ein in etwa scheibenförmiger, entfaltbarer bzw. aufblähbarer Gummibalg dessen äußere Konturen und Abmessungen dem Inneren eines Reifens entsprechen. Unterseitig weist der Vulkanisationsbalg 2 in etwa mittig eine kreisförmige Vulkanisationsbalganschlussplatte 5 auf.

Die Vulkanisationsbalganschlussplatte 5 ist mit einer Hubeinrichtung (nicht dargestellt) versehen, um den Vulkanisationsbalg 2 in der Reifenform 3 anzuordnen. Als Material für die Vulkanisationsbalganschlussplatte 5 wird ein thermisch gut leitendes Material, wie bspw. ein Metall, wie z.B. Aluminium oder dergleichen verwendet. Die Hubeinrichtung ist bspw. als hydraulische Kolben-Zylinder-Einheit ausgebildet.

Eine Heizmediumquelle 6 ist über eine Heizmediumzuführleitung 7 mit der Vulkanisationsbalganschlussplatte 5 verbunden. In der Heizmediumzuführleitung 7 ist ein Heizmediumventil 8 angeordnet. Die Heizmediumquelle 6 ist als Verdampfer oder als Einrichtung zum Zuführen von Heißwasser ausgebildet. Mittels der Heizmediumquelle 6 ist der Vulkanisationsbalg 2 mit Dampf und/oder Heißwasser beaufschlagbar.

An der Vulkanisationsbalganschlussplatte 5 ist eine Abführleitung 33 angeschlossen. In die Abführleitung 33 ist ein Abführventil 34 integriert.

Die Vulkanisationsbalganschlussplatte 5 weist eine Bypassleitung 9 auf, über die ein im Inneren des Vulkanisationsbalges 2 angeordnetes Medium in einer Zirkulationsrichtung 10 zirkulierbar ist.

Ein Ende der Bypassleitung 9 bildet an der Vulkanisationsbalganschlussplatte 5 einen Einlass 11 in die Bypassleitung 9 aus. Das andere Ende der Bypassleitung 9 bildet entsprechend an der Anschlussplatte einen Auslass 12 aus der Bypassleitung 9 aus. Die Zirkulationsrichtung 10 führt vom Einlass 11 der Bypassleitung 9 zum Auslass 12.

Am Einlass 11 der Bypassleitung 9 ist unmittelbar an der Vulkanisationsbalganschlussplatte 5 ein Bypasseinlassventil 13 angeordnet.

Nach dem Bypasseinlassventil 13 ist in der Bypassleitung 9 eine Pumpe 14 vorgesehen. Die Pumpe ist zum Zirkulieren eines Mediums aus dem Inneren des Vulkanisationsbalges 2 über die Bypassleitung 9 ausgebildet.

Im Bereich zwischen dem Bypasseinlassventil 13 und der Pumpe 14 ist in der Bypassleitung 9 ein Sensor 18 angeordnet, der mit einer Detektionseinrichtung 19 verbunden ist. Die Detektionseinrichtung 19 ist ein Sauerstoffkonzentrationsmessgerät. Derartige Sauerstoffkonzentrationsmessgeräte bzw. Sauerstoffanalysatoren sind bspw. unter der Bezeichnung SITRANS-SL der Firma Siemens oder auch unter der Bezeichnung Singlechannel Gasmonitor von der Firma MONICON Technology erhältlich.

In Zirkulationsrichtung 10 ist nach der Pumpe 14 ein Katalysator 15 in der Bypassleitung 9 angeordnet. Der Katalysator 15 ist derart ausgebildet, dass eine Reaktion zwischen Sauerstoff und Wasserstoff zu Wasser beschleunigt wird. Der Katalysator 15 ist direkt auf der Vulkanisationsanschlussplatte 5 fixiert, so dass der Katalysator 15 die Vulkanisationsbalganschlussplatte 5 thermisch kontaktiert.

Nach dem Katalysator 15 ist in Zirkulationsrichtung 10 ein erstes Absperrventil 16 in der Bypassleitung 9 vorgesehen.

Nach dem ersten Absperrventil 16 ist die Bypassleitung 9 über ein Bypassausgangsventil 17, welches unmittelbar an der Vulkanisationsbalganschlussplatte 5 angeordnet ist, mit dem Ausgang des Vulkanisationsbalg 2 verbunden.

Die Vorrichtung 1 weist eine Reduktionsgasquelle 20 auf. Die Reduktionsgasquelle 20 ist über eine Reduktionsgaszuführleitung 21 mit der Bypassleitung 9 im Bereich zwischen der Pumpe 14 und dem Katalysator 15 verbunden. In der Reduktionsgaszuführleitung 21 ist ein Reduktionsgasventil 22 vorgesehen. Die Reduktionsgasquelle ist im vorliegenden Ausführungsbeispiel eine Formiergasquelle. Das Formiergas besteht vorzugsweise aus 95 Vol.% Stickstoff und 5 Vol.% Wasserstoff.

Eine Druckgasquelle 23 ist über eine Druckgaszuführleitung 24 mit der Bypassleitung 9 im Bereich zwischen dem ersten Absperrventil 16 und dem Bypassausgangsventil 17 verbunden.

Die Druckgaszuführleitung 24 ist mit der Bypassleitung 9 im Bereich zwischen dem Katalysator 15 und der Pumpe 14 bzw. dem Reduktionsgasventil 22 verbunden. Diese Leitung wird als Verbindungsleitung 29 bezeichnet. In dieser Verbindungsleitung 29 ist ein drittes Absperrventil 30 angeordnet.

Die Druckgaszuführleitung 24 weist einen ersten Leitungsabschnitt 25 und einen zweiten Leitungsabschnitt 26 auf. Der erste Leitungsabschnitt 25 erstreckt sich von der Druckgasquelle 23 bis zur Verbindungsleitung 29. Der zweite Leitungsabschnitt 26 erstreckt sich von der Verbindungsleitung 29 bis zur Bypassleitung 9. Im ersten Leitungsabschnitt 25 ist ein Druckgasventil 27 angeordnet. Der zweite Leitungsabschnitt 26 weist ein zweites Absperrventil 28 auf. Die Druckgasquelle ist eine Stickstoffquelle.

Die Reifenform 3 weist eine elektrische Heizeinrichtung (nicht dargestellt) auf.

Es ist eine Steuereinrichtung 31 vorgesehen, die über Steuerleitungen 32 mit den Ventilen, der Pumpe, der Detektionseinrichtung, der Heizeinrichtung und der Hubeinrichtung verbunden ist.

Vorzugsweise ist die Vulkanisationsbalganschlussplatte 5 mulden- bzw. trichterförmig (nicht dargestellt) ausgebildet, wobei im tiefsten Bereich der Vulkanisationsbalganschlussplatte 5 die Abführleitung 33 angeordnet ist. Dies hat den Vorteil, dass das Heizmedium bzw. Wasser vollständig aus dem Vulkanisationsbalg 2 abgeführt werden kann, da es nachdem es kondensiert ist von selbst zum tiefsten Punkt der Vulkanisationsbalganschlussplatte 5 läuft. Somit kann das Wasser nicht in die Bypassleitung 9 eindringen und den Katalysator 15 schädigen. Vorteilhafterweise sind das Bypasseinlassventil 13 im Bereich des Einlasses 11 und das Bypassauslassventil 17 im Bereich des Auslasses 12 derart ausgestaltet, dass Wasser von deren Oberfläche abläuft und nicht in dem Bereich der Ventile 13, 17 verbleibt. Wenn die Vulkanisationsbalganschlussplatte 5 eben ausgebildet ist kann zumindest im Bereich der Abführleitung 33 ein kleiner Abführtrichter bzw. eine Abführmulde (nicht dargestellt) vorgesehen sein.

Weiterhin kann auch vorgesehen sein, dass auf dem Einlass 11 und dem Auslass 12 jeweils ein sich in vertikaler Richtung erstreckender Rohrabschnitt angeordnet ist. Diese Rohrabschnitte sind mit Stickstoff spülbar und verhindern, dass Heizmedium aus dem Inneren des Vulkanisationsbalges 2 den Katalysator beschädigt. Das Befüllen mit Stickstoff wird dadurch erleichtert.

Der Sensor 18 kann auch im Vulkanisationsbalg 2 angeordnet sein. Es kann auch eine Kapillarleitung vorgesehen sein, die im Vulkanisationsbalg 2 oder in der Bypassleitung 9 angeordnet ist, über die eine Gasprobe entnommen wird, die dann der Detektionseinrichtung 19 zur Bestimmung der Konzentration zugeführt wird.

Im Folgenden wird das erfindungsgemäße Verfahren zum Vulkanisieren von Reifen beschrieben.

Das gesamte Verfahren wird von der Steuereinrichtung 31 automatisch gesteuert, die über die Steuerleitungen 32 die einzelnen Komponenten der Vorrichtung 1 ansteuert.

Zunächst wird die Reifenform 3 mittels der elektrischen Heizeinrichtung aufgeheizt. Anschließend wird ein Reifenrohling 4 in die Reifenform 3 eingelegt.

Der Vulkanisationsbalg 2 wird mittels der Hubeinrichtung zentral mittig in der Reifenform 3 bzw. dem Reifenrohling 4 angeordnet.

Anschließend wird der Vulkanisationsbalg 2 mit einem Heizmedium aus der Heizmediumquelle 6 über das geöffnete Heizmediumventil 8 und die Heizmediumzuführleitung 7 befüllt und somit entfaltet. Auf diese Weise wird der Reifenrohling 4 aufgeheizt und an die Reifenform 3 angepresst.

Nachdem eine Temperatur von ca. 150 °C bis 180 °C und ein Druck von ca. 3 bar bis 5 bar erreicht ist und der Reifenrohling die entsprechende Temperatur erreicht hat, wird das Heizmedium über die Abführleitung 10 aus dem Vulkanisationsbalg abgeführt.

Das Heizmedium wird dann durch Stickstoff ersetzt.

Hierfür wird das Abführventil 34 geöffnet, um das Heizmedium über die Abführleitung 33 aus dem Vulkanisationsbalg 2 abzuführen. Gleichzeitig werden das Druckgasventil 27 und das zweite Absperrventil geöffnet. Der Stickstoff strömt durch das geöffnete Druckgasventil 27 über die Druckgaszuführleitung 24 aus der Druckgasquelle 23 in die Bypassleitung 9 und in den Auslass 12 und somit in den Vulkanisationsbalg 2, wo er das Heizmedium aus dem Vulkanisationsbalg verdrängt.

Durch den Stickstoff wird der Vulkanisationsbalg 2 mit einem vorbestimmten Druck von ca. 3 bar bis 5 bar beaufschlagt.

Wenn das Heizmedium vollständig aus dem Vulkanisationsbalg abgeführt ist, kann das Bypasseingangsventil 13 kurz geöffnet werden, um Reste des Heizmediums, die sich im Bereich des Einlasses 11 angesammelt haben wegzuspülen. Dieses Heizmedium insbesondere in Form von Wasser könnte ansonsten in die Bypassleitung 9 eindringen und den Katalysator 15 beschädigen.

Wenn der vorbestimmte Druck erreicht ist wird das Druckgasventil 27 geschlossen.

Gemäß dem ersten Ausführungsbeispiel des Verfahrens ist vorgesehen den Vulkanisationsbalg 2 zunächst nur mit Stickstoff zu beaufschlagen.

Die Haltephase dauert bei normalen PKW Reifen in der Regel 6 bis 10 Minuten.

Während dieser Zeit wird in etwa ein Mal alle 20 Sekunden bzw. alle 45 Sekunden und vorzugsweise in etwa ein Mal pro Minute das Gas, insbesondere Stickstoff, intervallweise aus dem Inneren des Vulkanisationsbalges 2 über die Bypassleitung 9 in Zirkulationsrichtung 10 zirkuliert, wodurch er am Oxidanssensor 18 vorbeigeführt wird. Es kann auch vorgesehen sein, den Stickstoff permanent, mit einer geringen Strömungsgeschwindigkeit über die Bypassleitung 9 zu zirkulieren.

Um den Stickstoff zu zirkulieren werden das Bypasseinlassventil 13 und das erste Absperrventil 16 geöffnet. Das zweite und das dritte Ansperrventil 28, 30 sind ebenso wie das Druckgasventil 27 und das Reduktionsgasventil 22 geschlossen.

Anschließend wird die Pumpe 14 eingeschalten und das Bypassauslassventil 17 geöffnet.

Dadurch werden der Stickstoff und das Oxidans bzw. Sauerstoff über die Bypassleitung 9 zirkuliert.

Der Sensor 18 und die Detektionseinrichtung 19 überwachen permanent oder intervallweise bspw. in etwa ein Mal alle 20 Sekunden bzw. alle 45 Sekunden und vorzugsweise in etwa ein Mal pro Minute entsprechend dem Zirkulationsrythmus den Sauerstoffgehalt im Stickstoff.

Wenn die Konzentration an Oxidans bzw. Sauerstoff im Vulkanisationsbalg bei der Messung einen Grenzwert von von 0 ppm bzw. 1 ppm bzw. 2,5 ppm bzw. 5 ppm bzw. 10 ppm bzw. 50 ppm bzw. 100 ppm bzw. 150 ppm bzw. 200 ppm bzw. 250 ppm im Stickstoff überschreitet wird das Reduktionsgasventil 22 geöffnet und Formiergas und der darin enthaltene Wasserstoff werden über die Reduktionsgaszuführleitung dem zirkulierenden Medium zugeführt. In der Bypassleitung 9 vermischt sich der Wasserstoff aus dem Formiergas mit dem restlichen Stickstoff und dem darin enthaltenen Oxidans (Sauerstoff). Hierdurch wird ein Formiergasgemisch ausgebildet dessen Wasserstoffkonzentration unter 5 Vol.% beträgt und das Oxidans enthält.

Dieses Formiergasgemisch, d.h. der Stickstoff ,der Wasserstoff und der darin enthaltene Sauerstoff strömen zusammen über den Katalysator 15. Dadurch, dass der Katalysator 15 die Vulkanisationsbalganschlussplatte 5 thermisch kontaktiert wird er erwärmt und weist durch die hohe Temperatur und den hohen Druck des Mediums im Vulkanisationsbalg 2 und in der Bypassleitung 9 ausgezeichnete Reaktionsbedingungen auf. Im Bereich des Katalysators 15 reagiert der Wasserstoff mit dem Sauerstoff zu Wasser und wird somit gebunden. Es wird jedoch maximal soviel Formiergas zugeführt, dass der Wasserstoffanteil im Formiergasgemisch weniger als 5 % bzw. weniger als 2,5 % und insbesondere weniger als 1 % beträgt. Andernfalls würde ein explosionsfähiges Gemisch bereitgestellt werden und die Vorrichtung müsste explosionsgeschützt ausgebildet werden.

Durch die intervallweise Probenentnahme wird die Konzentration des Oxidans regelmäßig überwacht und zuverlässig auf einem unkritischen Niveau gehalten, so dass es zu keiner Schädigung des Vulkanisationsbalges 2 durch Sauerstoffverunreinigungen kommt. Die Konzentration an Oxidans bzw. Sauerstoff im Vulkanisationsbalg beträgt dann von 50 ppm bis 25 ppm, bzw. von 10 ppm bis 5 ppm und vorzugsweise von 0 ppm bis 5 ppm im Formiergasgemisch.

Sollte aufgrund von Undichtigkeiten im System der Stickstoff und/oder das Formiergas zu viel Sauerstoff enthalten, kann auch vorgesehen sein den Stickstoff zusammen mit dem Formiergas vor dem Zuführen in den Vulkanisationsbalg 2 über den Katalysator 15 zu führen. Hierfür wird dann das zweite Absperrventil 28 geschlossen, das dritte Absperrventil 30 und das Reduktiongasventil 22 geöffnet. Das Formiergas strömt aus der Reduktionsgasquelle 20 über das geöffnete Reduktionsgasventil 22 und die Reduktionsgaszuführleitung 21. Der Stickstoff strömt dann zusammen mit dem Formiergas in die Bypassleitung 9 und in Zirkulationsrichtung 10 über den Katalysator 15. Dadurch wird der Sauerstoff durch den im Formiergas enthaltenen Wasserstoff gebunden und kann den Vulkanisationsbalg 2 nicht mehr schädigen. Dieses Formiergasgemisch strömt dann über das geöffnete erste Absperrventil 16 und das Bypassausgangsventil 27 in den Vulkanisationsbalg 2.

Gemäß einem zweiten Ausführungsbeispiel des erfindungsgemäßen Verfahrens wird der Vulkanisationsbalg 2 nach dem Aufheizen durch das Heizmedium mit einem Formiergasgemisch an Stelle von reinem Stickstoff beaufschlagt.

Ein derartiges Verfahren entspricht im Wesentlichen dem oben beschriebenen Verfahren. Beim erstmaligen Zuführen von Stickstoff wird lediglich gemeinsam mit dem Stickstoff Formiergas zugeführt, um ein Formiergasgemisch bereitzustellen.

Das Formiergas strömt aus der Reduktionsgasquelle 20 über das geöffnete Reduktionsgasventil 22 und die Reduktionsgaszuführleitung 21 in die Verbindungsleitung 29. Von der Verbindungsleitung 29 strömt das Formiergas über das geöffnete dritte Absperrventil 30 in die Druckgaszuführleitung 24. Dadurch vermischt sich das Formiergas mit dem Stickstoff im zweiten Leitungsabschnitt 26 und wird zusammen mit dem Stickstoff dem Vulkanisationsbalg zugeführt. Durch die Vermischung wird eine gleichmäßige Wasserstoffkonzentration im Vulkanisationsbalg 2 sichergestellt. Es wird in etwa so viel Formiergas zugeführt, dass der Wasserstoffanteil im Formiergasgemisch in etwa 1 Vol.%, bzw. 2 Vol.% und maximal 5 Vol.% beträgt.

Gemäß diesem Ausführungsbeispiel kann auf die Detektionseinrichtung verzichtet werden. Die Zudosierung von Wasserstoff kann bspw. anhand von Erfahrungswerten erfolgen.

In beiden Fällen ist es notwendig das Medium über den Katalysator zu zirkulieren, um das Oxidans zu binden.

Selbstverständlich kann auch eine Detektionseinrichtung 19 mit Sensor 18 vorgesehen sein, wobei die restlichen Verfahrensschritte den oben beschriebenen entsprechen.

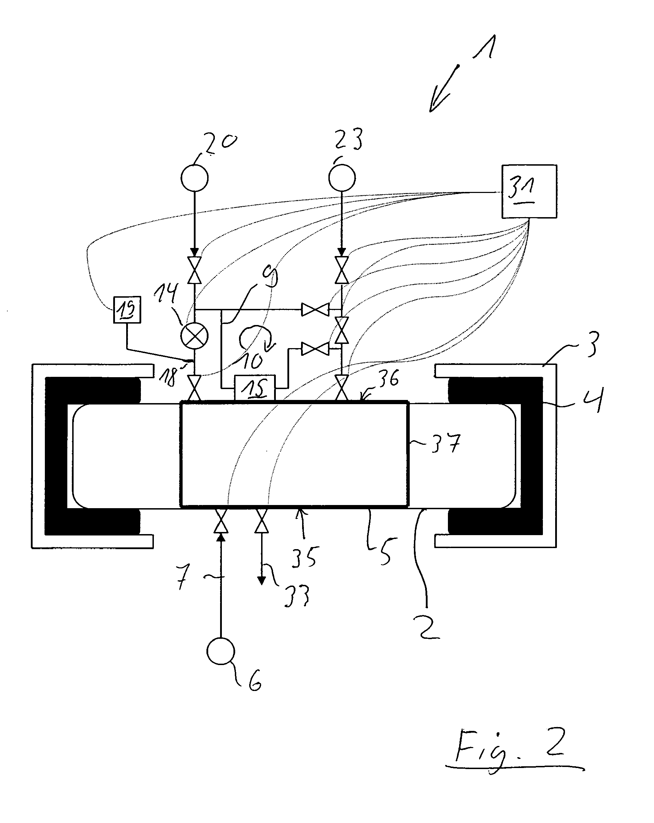

Im Folgenden wird ein zweites Ausführungsbeispiel (Fig. 2) der erfindungsgemäßen Vorrichtung beschrieben. Gleiche Bauteile sind mit den gleichen Bezugszeichen versehen.

Der Vulkanisationsbalg 2 ist als in etwa kreisringförmiger Schlauch ausgebildet und um einen in etwa zylinderförmigen Vulkanisationsbalgträger 5 herum angeordnet und mit diesem verbunden.

Der Vulkanisationsbalgträger 5 weist eine Unterseite 35 und eine Oberseite 36 auf, die über Vertikalstreben 37 miteinander verbunden sind. Der Vulkanisationsbalgträger 5 ist aus einem thermisch gut leitenden Material wie bspw. einem Metall wie Aluminium oder dergleichen ausgebildet.

Der Vulkanisationsbalgträger 5 ist oberseitig mit einer Hubeinrichtung (nicht dargestellt) versehen.

Die Unterseite des Vulkanisationsbalgträgers 5 ist über entsprechende Anschlüsse mit einer Heizmediumzuführleitung 7 und mit einer Abführleitung 33 verbindbar. Die Verbindung kann durch Verbindungsmittel (nicht dargestellt), wie z.B. Schneidringverschraubungen, Steckverbindungen, Bajonettverschlüsse oder andere geeignete Verbindungen, erfolgen.

Weiterhin ist eine Zentriereinrichtung (nicht dargestellt) vorgesehen, um die Heizmediumzuführleitung 7 und die Abführleitung 33 beim Absenken des Vulkanisationsbalges 2 entsprechend den Anschlüssen zu positionieren. Die Zentriereinrichtung kann bspw. drei Zentrierstifte umfassen, die beim Absenken des Vulkanisationsbalgträgers 5 mit entsprechenden Ausnehmungen in Eingriff gebracht werden.

Die übrigen Bauteile der Vorrichtung 1, die gemäß dem ersten Ausführungsbeispiel unterhalb der Vulkanisationsbalganschlussplatte 5 angeordnet sind, sind gemäß dem zweiten Ausführungsbeispiel auf der Oberseite 36 des Vulkanisationsbalgträgers 5 angeordnet. Eine derartige Anordnung weist den Vorteil auf, dass nicht die Gefahr besteht, dass der in der Bypassleitung 9 angeordnete Katalysator 15 durch Heizmedium bzw. Wasser beschädigt werden kann.

In einer weiteren Ausführungsform der erfindungsgemäßen Vorrichtung 1 kann die Reduktionsgasquelle 23 als Wasserstoffquelle ausgebildet sein. Allerdings ist eine entsprechende Vorrichtung explosionsgeschützt auszubilden. Der Wasserstoffanteil im Formiergasgemisch beträgt dann weniger als 10 % bzw. weniger als 2,5 % und vorzugsweise weniger als 5 %.

Es kann auch vorgesehen sein, den Vulkanisationsbalg lediglich mit Formiergas zu beaufschlagen, was allerdings mit höheren Kosten verbunden ist.

In einer weiteren Ausführungsform der erfindungsgemäßen Vorrichtung kann auch vorgesehen sein, den Katalysator 15 im Inneren des Vulkanisationsbalges 2 anzuordnen. Allerdings wäre es dann zweckmäßig diesen über entsprechende Ventile oder Klappen oder dergleichen vor Wasser bzw. dem Heizmedium zu schützen, um eine Beschädigung zu vermeiden.

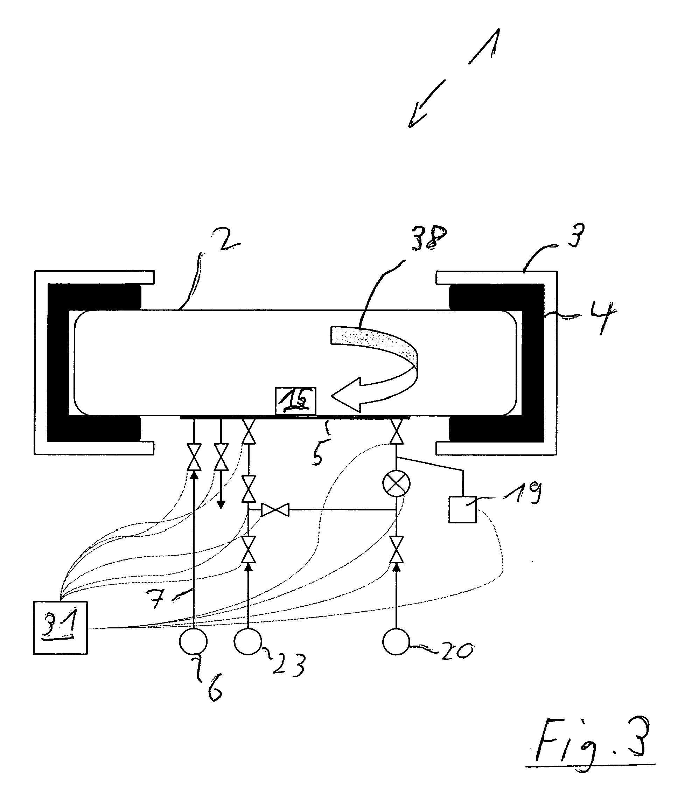

Im Folgenden wird ein drittes Ausführungsbeispiel (Fig. 3) der erfindungsgemäßen Vorrichtung beschrieben. Gleiche Bauteile sind mit den gleichen Bezugszeichen versehen.

Gemäß diesem Ausführungsbeispiel ist der Katalysator 15 im Vulkanisationsbalg 2 angeordnet. Ein hierbei verwendeter Katalysator 15 ist unempfindlich gegen das Heizmedium bzw. gegen das im Heizmedium enthaltene Wasser.

Der Katalysator 15 ist im Vulkanisationsbalg 2 im Bereich der Vulkanisationsbalganschlussplatte 5 angeordnet.

Der Stickstoff und das Formiergas werden hierbei derart in den Vulkanisationsbalg eingebracht, dass eine Zwangsströmung erzeugt wird, so dass beim Zirkulieren der Stickstoff, das Formiergas und das Oxidans über den Katalysator 15 in einer Zirkulationsrichtung 38 zirkuliert werden.

Bei einer derartigen Vorrichtung kann der Sensor 18 auch im Vulkanisationsbalg 2 angeordnet sein.

Bei der Verwendung eines im Hinblich auf Heizwasser unempfindlichen Katalaysators sind auch einfachere Aufbauten als die oben beschriebenen möglich, da auf die Einrichtungen, die ein Eindringen von Wasser in den Katalysator verhindern, verzichtet werden kann.

Alternativ kann bei den beschriebenen Ausführungsbeispielen an Stelle des Abführventils 34 auch ein auf einen konstanten Druck eingestellter Druckregler vorgesehen sein. Dies hat den Vorteil, dass der Druck im Vulkanisationsbalg konstant bleibt und kein Ventil geschaltet werden muss.

### Bezugszeichenliste

- 1: Vorrichtung
- 2: Vulkanisationsbalg
- 3: Reifenform
- 4: Reifenrohling
- 5: Vulkanisationsbalganschlussplatte
- 6: Heizmediumquelle
- 7: Heizmediumzuführleitung
- 8: Heizmediumventil
- 9: Bypassleitung
- 10: Zirkulationsrichtung
- 11: Einlass
- 12: Auslass
- 13: Bypasseinlassventil
- 14: Pumpe
- 15: Katalysator
- 16: Erstes Absperrventil
- 17: Bypassauslassventil
- 18: Sensor
- 19: Detektionseinrichtung
- 20: Reduktionsgasquelle
- 21: Reduktionsgaszuführleitung
- 22: Reduktionsgasventil
- 23: Druckgasquelle
- 24: Druckgaszuführleitung
- 25: Erster Leitungsabschnitt
- 26: Zweiter Leitungsabschnitt
- 27: Druckgasventil
- 28: Zweites Absperrventil
- 29: Verbindungsleitung
- 30: Drittes Absperrventil
- 31: Steuereinrichtung
- 32: Steuerleitungen
- 33: Abführleitung
- 34: Abführventil
- 35: Unterseite
- 36: Oberseite
- 37: Vertikalstreben
- 38: Zirkulationsrichtung

## Patentansprüche

1. Verfahren zum Vulkanisieren von Reifen bei dem ein Vulkanisationsbalg (2) mit einem Druckgas beaufschlagt wird, um einen vorbestimmten Druck auf den zu vulkanisierenden Reifen (4) auszuüben,
**dadurch gekennzeichnet,**
**dass** dem Vulkanisationsbalg (2) zusätzlich zum Druckgas ein reduzierendes Gas zugeführt wird, wobei das Gemisch aus Druckgas und reduzierendem Gas ein Formiergasgemisch ist.

2. Verfahren gemäß Anspruch 1,
**dadurch gekennzeichnet,**
**dass** das reduzierende Gas teilweise unter Zuhilfenahme eines Katalysators (15) mit einem im Druckgas enthaltenen Oxidans reagiert.

3. Verfahren nach Anspruch 1 oder 2,
**dadurch gekennzeichnet,**
**dass** eine Konzentration des Oxidans im Vulkanisationsbalg (2) detektiert wird und dass nach Maßgabe der detektierten Konzentration des Oxidans reduzierendes Gas dem Druckgas zugeführt wird.

4. Verfahren nach Anspruch 3,
**dadurch gekennzeichnet,**
**dass** ab einem Grenzwert von 0 ppm bzw. 1 ppm bzw. 2,5 ppm bzw. 5 bzw. 10 ppm bzw. 50 ppm bzw. 100 ppm bzw. 150 ppm bzw. 200 ppm bzw. 250 ppm der Konzentration des Oxidans im Druckgas reduzierendes Gas zugeführt wird

5. Verfahren nach einem der Ansprüche 2 bis 4,
**dadurch gekennzeichnet,**
**dass** das im Vulkanisationsbalg (2) befindliche Formiergasgemisch über eine mit dem Vulkanisationsbalg (2) verbundene Bypassleitung (9), in der der Katalysator (15) angeordnet ist, zirkuliert werden.

6. Verfahren nach einem der Ansprüche 1 bis 6,
**dadurch gekennzeichnet,**
**dass** eine Konzentration des Oxidans im Vulkanisationsbalg (2) detektiert wird und dass nach Maßgabe der detektierten Konzentration des Oxidans Formiergas über die Bypassleitung (9), in der der Katalysator (15) angeordnet ist, zirkuliert wird.

7. Verfahren nach einem der Ansprüche 1 bis 6,
**dadurch gekennzeichnet,**
**dass** als Druckgas Stickstoff verwendet wird.

8. Verfahren nach einem der Ansprüche 1 bis 7,
**dadurch gekennzeichnet,**
**dass** als reduzierendes Gas Formiergas verwendet wird.

9. Vorrichtung zum Vulkanisieren von Reifen umfassend
einen Vulkanisationsbalg (2), wobei der Vulkanisationsbalg
mit einer Druckgasquelle (23) zum Beaufschlagen des Vulkanisationsbalges (2) mit Druckgas ausgebildet ist, um einen vorbestimmten Druck auf den zu vulkanisierenden Reifen auszuüben,
**dadurch gekennzeichnet,**
**dass** die Vorrichtung (1) eine Reduktionsgasquelle (20) aufweist, um dem Vulkanisationsbalg (2) ein reduzierenden Gases zuzuführen, wobei das Gemisch aus Druckgas und reduzierendem Gas ein Formiergasgemisch ist.

10. Vorrichtung nach Anspruch 9,
**dadurch gekennzeichnet,**
**dass** die Druckgasquelle (23) und die Reduktionsgasquelle (20) eine einheitliche Quelle sind oder als separate Quellen ausgebildet sind.

11. Vorrichtung nach Anspruch 9 oder 10,
**dadurch gekennzeichnet,**
**dass** der Vulkanisationsbalg (2) mit einer Bypassleitung (9) verbunden ist, in der ein Katalysator (15) angeordnet ist, wobei die Druckgasquelle (23) und die Reduktionsgasquelle (20) mit der Bypassleitung (20) verbunden sind und eine Pumpe (14) in der Bypassleitung (9) angeordnet ist, die zum Zirkulieren des Formiergasgemisches durch den Vulkanisationsbalg (2) und die Bypassleitung (9) ausgebildet ist.

12. Vorrichtung nach einem der Ansprüche 9 bis 11,
**dadurch gekennzeichnet,**
**dass** eine Detektionseinrichtung (19) vorgesehen ist, die die Konzentration eines Oxidans im Vulkanisationsbalg (2) detektiert.

13. Vorrichtung nach einem der Ansprüche 9 bis 12,
**dadurch gekennzeichnet,**
**dass** die Reduktionsgasquelle (20) eine Formiergasquelle ist und die Druckgasquelle (23) eine Stickstoffquelle ist.

14. Vorrichtung nach einem der Ansprüche 9 bis 13,
**dadurch gekennzeichnet,**
**dass** der Katalysator (15) einen Bereich des Vulkanisationsbalges (2) derart kontaktiert, dass ein Wärmeübertrag von einer Reifenform (3) auf den Katalysator (15) stattfindet.
